# EUROPÄISCHE PATENTANMELDUNG

(11) **EP 4 279 221 A1**
(43) Veröffentlichungstag der Anmeldung: **22.11.2023**
(21) Anmeldenummer: 22174203.4
(22) Anmeldetag: 19.05.2022
(51) Int. Cl.: B25J 5/00, B25J 9/00, B25J 11/00, B25J 13/08

(54) **BAUROBOTER MIT PARALLELMANIPULATOR**

(71) Anmelder: Hilti Aktiengesellschaft, 9494 Schaan (LI)
(72) Erfinder: Kumar, Nitish, 9470 Buchs (CH); Korl, Sascha, 9470 Buchs (CH); Lanegger, Christian, 8008 Zürich (CH); Ruggia, Marco, 7000 Chur (CH); Tognon, Marco, 8050 Zürich (CH); Ott, Lionel, 8049 Zürich (CH); Siegwart, Roland, 6430 Schwyz (CH); Brugger, Peter, 6800 Feldkirch (CH); Zanona, Julia, 6800 Feldkirch (CH)
(74) Vertreter: Hilti Aktiengesellschaft Corporate Intellectual Property

(57) **Zusammenfassung**

Die Erfindung betrifft einen **Bauroboter** (10) zur Ausführung einer Bauarbeit an einem Baustellenobjekt. Er umfasst eine mobile Plattform (12), einen Endeffektor (16), wobei der Endeffektor (16) wenigstens ein Werkzeug oder eine Werkzeugaufnahme zur Aufnahme eines Werkzeugs aufweist, einen Parallelmanipulator (18), wobei der Endeffektor (16) und die mobile Plattform (12) über den Parallelmanipulator (18) miteinander verbunden sind, und wobei der Endeffektor (16) wenigstens ein Kontaktelement (24) aufweist, das eingerichtet ist, das zu bearbeitende Baustellenobjekt während einer Bauarbeit zu kontaktieren. Die Erfindung ermöglicht die Ausführung von Bauarbeiten mit einer besonders hohen Präzision.

## Beschreibung

Die Erfindung betrifft einen Bauroboter zur Ausführung einer Bauarbeit an einem Baustellenobjekt, umfassend eine mobile Plattform, einen Endeffektor, wobei der Endeffektor wenigstens ein Werkzeug oder eine Werkzeugaufnahme zur Aufnahme eines Werkzeugs aufweist.

Bauarbeiten auf Baustellen sind oftmals mit einer hohen Positionsgenauigkeit auszuführen. Beispielsweise sind Bohrungen an Decken häufig mit Positionsgenauigkeiten von 0,5 cm oder besser auszuführen, damit beispielsweise an den Decken anzuordnende Deckenelemente an den Bohrungen ordnungsgemäß fixiert werden können. Sollen derartige Bohrarbeiten mit einem Bauroboter ausgeführt werden, mussten bislang sehr hohe Anforderungen insbesondere an die erreichbare Positionsgenauigkeit der mobilen Plattform des Bauroboters gestellt werden. Insbesondere war es bislang nicht möglich, die erforderlichen Positionsgenauigkeiten bei beliebigen Arten von mobilen Plattformen zu erreichen. Bislang verwendbare mobile Plattformen sind in ihren Bewegungsmöglichkeiten stark eingeschränkt und / oder sehr kostenaufwändig in der Herstellung. Weiter ist besonders wünschenswert, wenn Bauarbeiten mit solchen Positionsgenauigkeiten auch an schwierig erreichbaren Orten, beispielsweise an hohen Decken, ausführbar sind.

Aufgabe der vorliegenden Erfindung ist es daher, einen kostengünstigen Bauroboter anzubieten, der Bauarbeiten mit einer besonders hohen Positionsgenauigkeit ausführen kann. Besonders wünschenswert sind Positionsgenauigkeiten von 0,5 cm oder weniger.

Gelöst wird die Aufgabe durch einen **Bauroboter** zur Ausführung einer Bauarbeit an einem Baustellenobjekt, umfassend eine mobile Plattform, einen Endeffektor, wobei der Endeffektor wenigstens ein Werkzeug oder eine Werkzeugaufnahme zur Aufnahme eines Werkzeugs aufweist, und einen Parallelmanipulator, wobei der Endeffektor und die mobile Plattform über den Parallelmanipulator miteinander verbunden sind, und wobei der Endeffektor wenigstens ein Kontaktelement aufweist, das eingerichtet ist, das zu bearbeitende Baustellenobjekt während einer Bauarbeit zu kontaktieren und eine Sensorik zur Erfassung einer Pose des Endeffektors relativ zur mobilen Plattform.

Über den Parallelmanipulator können somit die mobile Plattform und der Endeffektor miteinander, insbesondere zueinander beweglich, verbunden sein. Durch das Kontaktelement kann die Position des Endeffektors dann relativ zum Baustellenobjekt, beispielsweise einer zu bearbeitenden Decke oder Wand, zumindest kurzzeitig fixiert werden. Auswirkungen von Vibrationen oder anderen, insbesondere kleineren, Positionsänderungen der mobilen Plattform auf die Position des Endeffektors können reduziert werden. Die Positionsgenauigkeit, mit der eine vom Endeffektor erreichte Position eingenommen und / oder beibehalten wird, kann somit besonders hoch sein. Durch die Sensorik lässt sich diese Positionsgenauigkeit noch weiter steigern, indem Relativbewegungen zwischen der mobilen Plattform und dem Endeffektor präzise erfasst und gegebenenfalls Korrekturmaßnahmen eingeleitet werden können. Externe Einflüsse, beispielsweise auf die mobile Plattform einwirkende Impulsstöße, beispielsweise verursacht durch Windböen, können aufgrund des Kontakts des Endeffektors über das Kontaktelement zum Baustellenelement selektiv auf die mobile Plattform wirken und so zu einem relativen Versatz dieser relativ zum Endeffektor führen. Dieser Versatz kann durch die Sensorik detektiert werden. Bei Bedarf kann dann der Parallelmanipulator gegengesteuert werden, um eine Korrekturbewegung auszuführen.

Unter einem Werkzeug kann ein Einsatzwerkzeug wie beispielsweise ein Markierwerkzeug, Bohrer, ein Meißel, ein Sägeblatt oder ein Schleifwerkzeug, verstanden werden. Es kann alternativ oder ergänzend auch unter einem Werkzeug eine Werkzeugmaschine, insbesondere eingerichtet zur Aufnahme und / oder Nutzung eines Werkzeugs, beispielsweise eine Markiermaschine, beispielsweise eine steuerbare Farbsprühdüse, eine Bohrmaschine, eine Meißelmaschine, eine Schleifmaschine oder dergleichen, verstanden werden.

Unter einer Pose eines Gegenstandes kann eine Position und / oder eine Lage, d. h. eine Orientierung, des Gegenstandes verstanden werden.

Die Sensorik kann die Pose indirekt erfassen. Beispielsweise kann sie auf Positionssensoren zur Detektion von Positionen der Arme des Parallelmanipulators basieren und aus den von diesen gewonnenen Daten auf die Pose schließen.

Besonders bevorzugt kann die Sensorik die Pose direkt erfassen, insbesondere durch Bestimmung wenigstens einer Position und / oder Lage eines Punktes auf dem Endeffektor relativ zur mobilen Plattform. Durch eine solche direkte Messung kann sich ein sonst unter Umständen erforderlicher Abgleich der Messwerte der Sensorik mit den tatsächlichen Bewegungen des Parallelmanipulators erübrigen.

Die Sensorik kann mechanisch arbeitend ausgebildet sein. Beispielsweise kann sie mechanisch eine Stellung eines Elements des Parallelmanipulators, insbesondere relativ zur mobilen Plattform, erfassen.

Alternativ oder ergänzend ist auch denkbar, dass die Sensorik auf einer optischen Basis arbeitet.

Die Sensorik kann dazu beispielsweise einen Laserdistanzmesser umfassen. Sie kann alternativ oder ergänzend wenigstens eine Bildaufnahmeeinheit umfassen. Beispielsweise kann die Bildaufnahmeeinheit eine Schwarzweiß- und / oder eine Farbbildkamera umfassen.

Sie kann an der mobilen Plattform und / oder am Endeffektor angeordnet sein.

Am Endeffektor und / oder am Parallelmanipulator und / oder allgemein an einem der Sensorik gegenüberliegenden Teil kann eine Lokalisationskennzeichnung angeordnet und / oder ausgebildet sein. Die Lokalisationskennzeichnung kann beispielsweise eine AruCo-Markierung oder dergleichen umfassen.

Insbesondere eine auf einer optischen Basis arbeitende Sensorik kann berührungslos und mit hoher Frequenz die Pose, insbesondere mit hoher Genauigkeit, erfassen. Auch kann eine solche Sensorik ein geringes Gewicht aufweisen.

Um eine kontinuierliche Überwachung der Pose zu ermöglichen, kann die Lokalisationskennzeichnung zumindest teilweise, vorzugsweise vollständig, in einem Sichtfeld der Bildaufnahmeeinheit angeordnet sein.

Der Bauroboter kann auch einen Beschleunigungssensor aufweisen. Der Beschleunigungssensor kann insbesondere am Endeffektor ausgebildet sein. Der Beschleunigungssensor kann eingerichtet sein, Beschleunigungen entlang wenigstens einer Richtung, vorzugsweise zweidimensional, besonders bevorzugt dreidimensional, zu erfassen.

Durch die Sensorik und / oder den Beschleunigungssensor erfasste Änderungen der Pose können durch eine Stellvorrichtung des Bauroboters kompensierbar sein. Die Stellvorrichtung kann am Kontaktelement ausgebildet sein. Alternativ oder ergänzend kann die Stellvorrichtung das Kontaktelement bilden.

Denkbar ist insbesondere, dass die Stellvorrichtung durch den Parallelmanipulator ausgebildet ist.

Zur Ausführung der Bauarbeit kann das Werkzeug das zu bearbeitende Baustellenobjekt kontaktieren. Das Kontaktelement kann dann das Baustellenobjekt zusätzlich zum Werkzeug kontaktieren.

Dabei lassen sich Herstellungskosten reduzieren und die Herstellung vereinfachen, wenn der Parallelmanipulator als passives System ausgebildet ist.

Der Parallelmanipulator kann insbesondere als Hexapod ausgebildet sein. Alternativ ist auch denkbar, dass er als Tripod, auch teilweise als Deltamanipulator bezeichnet, ausgebildet sein kann.

Der Parallelmanipulator kann allgemein wenigstens drei, besonders bevorzugt wenigstens sechs, Freiheitsgrade, insbesondere relativ zur mobilen Plattform, aufweisen. Wenigstens drei Freiheitsgrade ermöglichen es - ohne Schwenken der mobilen Plattform von der Vertikalen in die Horizontale oder umgekehrt - an Decken oder Wänden zu arbeiten. Mit sechs Freiheitsgraden kann ohne Schwenken der mobilen Plattform sowohl an Decken als auch an Wänden gearbeitet werden. Auch können dadurch Bauarbeiten an sonst schwer erreichbaren Positionen, beispielsweise wenn ansonsten bei weniger Freiheitsgraden durch Installationselemente wie beispielsweise Leitungen oder Kabelführungen der Weg zur gewünschten Position versperrt wäre, ausgeführt werden.

Der Endeffektor kann zusätzlich weitere Freiheitsgrade bieten. Beispielsweise kann am Endeffektor ein teleskopierbares Element angeordnet sein, mit dem beispielsweise das Werkzeug relativ zum Endeffektor bewegbar ist.

Bei Bauarbeiten an Decken ist der Endeffektor oben auf dem Parallelmanipulator angeordnet. Der Parallelmanipulator sollte somit eingerichtet sein, bei solchen Bauarbeiten den Endeffektor stabil von unten stützen zu können. Dementsprechend ist es günstig, wenn die Arme des Parallelmanipulators derart angeordnet sind, sodass sich eine solche stabile Unterstützung ergibt.

Daher ist es günstig, wenn der Parallelmanipulator derart eingerichtet ist, bei geringer Auslenkung des Endeffektors relativ zur mobilen Plattform aus einer Ruhelage heraus selbsttätig, insbesondere schwerkraftgetrieben, in die Ruhelage zurückzukehren.

Eine hierzu mögliche Anordnung der Arme kann durch Aufstellen einer Energiebilanz des Systems, insbesondere unter Berücksichtigung potentieller, kinetischer und gegebenenfalls mechanischer Energie, beispielsweise in Federelementen gespeicherter Energie, und einer anschließenden Suche nach einem lokalen, oder bevorzugt einem globalen, Energieminimum ermittelt werden.

Bauarbeiten in großen Höhen, insbesondere an Decken, können ermöglicht werden, wenn die mobile Plattform eine Flugplattform ist. Flugplattformen weisen häufig originär geringe Positionsgenauigkeiten auf, und sind oftmals auch äußeren Einflüssen, beispielsweise Windstößen, ausgesetzt. Durch die oben genannten Maßnahmen kann trotz einer solchen geringen originären Positionsgenauigkeit ein Endeffektor mit der erforderlichen Positionsgenauigkeit geführt werden. Die Bauarbeiten können somit mit der erforderlichen Qualität ausgeführt werden. Die Flugplattform kann eine Drohne sein. Sie kann wenigstens einen Propeller aufweisen. Dabei kann Fliegen auch Schweben in der Luft umfassen. Die mobile Plattform kann zur kabelgebundenen und / oder zur kabelungebundenen Ausführung von Bauarbeiten eingerichtet sein. Beispielsweise kann sie während eines Fluges an eine Versorgungsleitung angeschlossen sein. Alternativ oder ergänzend kann sie auch einen Akkumulator, insbesondere Lithium-basiert, aufweisen. Denkbar ist auch, dass die Flugplattform eine Brennstoffzelle aufweist. Alternativ oder ergänzend ist auch denkbar, dass die mobile Plattform eine fahrbare Plattform umfasst und / oder als solche ausgebildet ist. Zur Vergrößerung ihrer Reichweite in der Vertikalen kann die mobile Plattform, insbesondere wenn sie als fahrbare Plattform ausgebildet ist, eine Hubvorrichtung aufweisen.

Der Bauroboter, insbesondere der Endeffektor kann einen Laserdistanzmesser aufweisen. In diesem Fall kann auf der Baustelle wenigstens eine Positionsmarkierung, angeordnet sein, sodass eine Pose des Bauroboters relativ zur Positionsmarkierung, bevorzugt zu mehreren Positionsmarkierungen, bestimmbar ist. Alternativ oder ergänzend kann er eingerichtet sein, von einer Totalstation zur Bestimmung seiner Position und / oder Lage erfasst zu werden. Dazu kann der Bauroboter beispielsweise einen Reflektor, zum Beispiel in Form eines Prismas, aufweisen. Somit kann eine Pose des Bauroboters, insbesondere eine Position und / oder eine Lage, relativ zu einem absoluten Bezugssystem der Baustelle und / oder der Totalstation bzw. der wenigstens einen Positionsmarkierung, ermittelt werden.

Aufgrund von Verdeckungen befinden sich Arbeitspositionen, an denen die Bauarbeit ausgeführt werden soll und zu denen daher das Werkzeug oder zumindest eine Spitze des Werkzeugs zu bringen ist, oftmals nicht im Sichtbereich der Totalstation bzw. Daher kann der Reflektor beziehungsweise der Laserdistanzmesser an der mobilen Plattform angeordnet sein, zu der oftmals eher eine Sichtverbindung herstellbar ist. Somit ist dann zumindest eine Pose der mobilen Plattform erfassbar und darüber bei Kenntnis des relativen Versatzes der mobilen Plattform zum Endeffektor, insbesondere zur Spitze des Werkzeugs, auch eine Pose des Endeffektors, insbesondere eine Pose der Spitze des Werkzeugs, ermittelbar.

Gibt es mehrere, insbesondere wenigstens drei, Kontaktelemente lässt sich der Endeffektor in mehreren Richtungen relativ zur Arbeitsstelle bzw. der Decke stabilisieren. So lässt sich beispielsweise eine Drei-Punkt-Stabilisierung erreichen.

Das Kontaktelement kann wenigstens ein Rad, insbesondere ein omnidirektionales Rad, aufweisen.

Besonders bevorzugt kann das Kontaktelement, insbesondere das Rad, antreibbar sein. Allgemein kann das Kontaktelement motorisch bewegbar und / oder verstellbar sein. Dadurch kann die Pose des Kontaktelements auf den zu kontaktierenden Untergrund abgestimmt werden.

Auch lässt sich somit eine Pose des Endeffektors, insbesondere des Werkzeugs, relativ zur Arbeitsstelle, an der die Bauarbeit auszuführen ist, durch geeignetes Bewegen des Kontaktelements, insbesondere des Rades, feinjustieren. Insbesondere kann so das Kontaktelement die Stellvorrichtung oder zumindest einen Teil der Stellvorrichtung bilden. Die Pose lässt sich somit zusätzlich wenigstens zweidimensional einstellen, sobald der Bauroboter die Arbeitsstelle, beispielsweise die Decke, mit seinem Kontaktelement kontaktiert.

Der Parallelmanipulator kann wenigstens ein Rückstellelement und / oder ein Dämpfungselement aufweisen. Schwingungen oder geringfügige Bewegungen der mobilen Plattform können somit gedämpft werden. Der Endeffektor und insbesondere das Werkzeug können somit relativ zur mobilen Plattform weiter stabilisiert werden. Das Rückstellelement und / oder das Dämpfungselement können ein Federelement aufweisen.

Der Bauroboter kann zur Ausführung von Markierungsarbeiten eingerichtet sein. Beispielsweise kann er eingerichtet sein, CAD-Daten, beispielsweise in Form von Building Information Model (BIM)-Daten, auf die Baustelle zu übertragen. Hierbei ist eine besondere Positionsgenauigkeit, insbesondere von höchstens 5 mm, besonders vorteilhaft.

Dazu kann das Werkzeug ein Markierwerkzeug sein und / oder umfassen. Das Werkzeug kann beispielsweise einen Stift, eine Sprühvorrichtung, eine Klebevorrichtung, insbesondere zum Aufkleben von Markierungen oder eine Graviervorrichtung, aufweisen.

Alternativ oder ergänzend kann das Werkzeug ein Bohrwerkzeug, ein Meißelwerkzeug, ein Schleifwerkzeug oder ein Schneidwerkzeug, insbesondere eine Sägeblatt, sein und / oder umfassen. Dementsprechend kann der Bauroboter eingerichtet sein zu bohren, zu meißeln und / oder zu schneiden.

Das Werkzeug kann an einer Hubvorrichtung angeordnet sein. Somit kann das Werkzeug auf die zu bearbeitenden Arbeitsstelle hin oder von dieser weg bewegt werden. Im Falle eines als Stift ausgebildeten Markierwerkzeugs und der Markierung von Positionen an einer Decke kann somit der Stift an einer zu markierenden Stelle auf die Decke aufgesetzt und bei Bedarf wieder von dieser entfernt werden.

Der Endeffektor kann einen x-y-Antrieb aufweisen. Der x-y-Antrieb kann eingerichtet sein, das Werkzeug und / oder die Hubvorrichtung zweidimensional relativ zum Endeffektor zu bewegen. Somit können beispielsweise im Falle des als Markierwerkzeug ausgebildeten Werkzeugs kleinere Strukturen einer Markierung, beispielsweise eines auf die Decke zu schreibenden Zeichens, auf die Decke übertragen werden, ohne dass der Endeffektor bewegt werden muss.

Der Endeffektor kann als selbständige Plattform ausgebildet sein, sodass er mit unterschiedlichen Arten von mobilen Plattformen kombinierbar ist.

Der Endeffektor, insbesondere mitsamt dem Parallelmanipulator und / oder einer oder mehreren der im Zusammenhang mit dem Endeffektor genannten Merkmalen, kann auch für sich bereits als Erfindung verstanden werden.

In den vorliegenden Rahmen fällt auch ein **kalibrationsfreier Bauroboter**, umfassend eine mobile Plattform und einen relativ zur mobilen Plattform beweglichen Manipulator. Der Bauroboter kann eine zumindest teilweise an der mobilen Plattform angeordnete und / oder ausgebildete, insbesondere optische, Sensorik aufweisen, die eingerichtet ist, eine Position und / oder eine Lage des Manipulators, insbesondere eines am Manipulator angeordneten Werkzeugs, relativ zur mobilen Plattform zu bestimmen. Ein Teil der Sensorik kann am Manipulator angeordnet und / oder ausgebildet sein. Die Sensorik kann eine Kamera und eine Lokalisationskennzeichnung umfassen. Vorzugsweise ist die Lokalisationskennzeichnung im Sichtfeld der Kamera angeordnet.

Der Manipulator kann beispielsweise einen mehrachsigen Arm aufweisen. Er kann alternativ oder ergänzend, insbesondere analog dem Vorbeschriebenen, ein Parallelmanipulator sein und / oder einen solchen umfassen.

Ein Vorteil des kalibrationsfreien Bauroboters ist es, dass dieser eine Position und / oder Lage des Endeffektors und / oder des Werkzeugs relativ zur mobilen Plattform selbsttätig und unabhängig von mechanischen Eigenschaften des Manipulators ermitteln kann. Wird somit der Manipulator getauscht, bedarf es keiner Kalibrierung oder allenfalls weniger Kalibrierungsmaßnahmen, um das Werkzeug mit dem ausgetauschten Manipulator präzise an gewünschte Positionen zu steuern. Vielmehr kann, beispielsweise in einer Rückkoppelungsschleife, der Manipulator bewegt werden und die erreichte Position des Endeffektors und / oder des Werkzeugs mit Hilfe der Sensorik relativ zur mobilen Plattform bestimmt werden. Weicht die erreichte Position von einer Sollposition ab, kann eine Korrekturbewegung des Manipulators wiederholt erfolgen, bis die Sollposition erreicht ist.

Auch der kalibrationsfreie Bauroboter kann ein oder mehrere der vorangehend und / oder nachfolgend beschriebenen Merkmale eines Bauroboters aufweisen.

Des Weiteren fällt in den vorliegenden Rahmen auch **eine Verwendung einer, insbesondere optischen, Sensorik** zusammen mit einem Bauroboter, der eine mobile Plattform und einen Manipulator umfasst, wobei eine Position und / oder Lage des Manipulators und / oder eines am Manipulator angeordneten Werkzeugs relativ zur mobilen Plattform mit Hilfe der Sensorik ermittelt wird.

Auch im Rahmen der Verwendung können die Sensorik und / oder der Bauroboter ein oder mehrere der vorangehend und / oder nachfolgend beschriebenen Merkmale eines Bauroboters bzw. einer Sensorik aufweisen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: ein Bauroboter, der an einer Decke eine Bauaufgabe ausführt,
- Fig. 2: eine Endeffektor-Plattform des Bauroboters, und
- Fig. 3: eine Lokalisationskennzeichnung.

In der nachfolgenden Beschreibung der Figuren werden zur Erleichterung des Verständnisses der Erfindung für gleiche oder sich funktional entsprechende Elemente jeweils die gleichen Bezugszeichen verwendet.

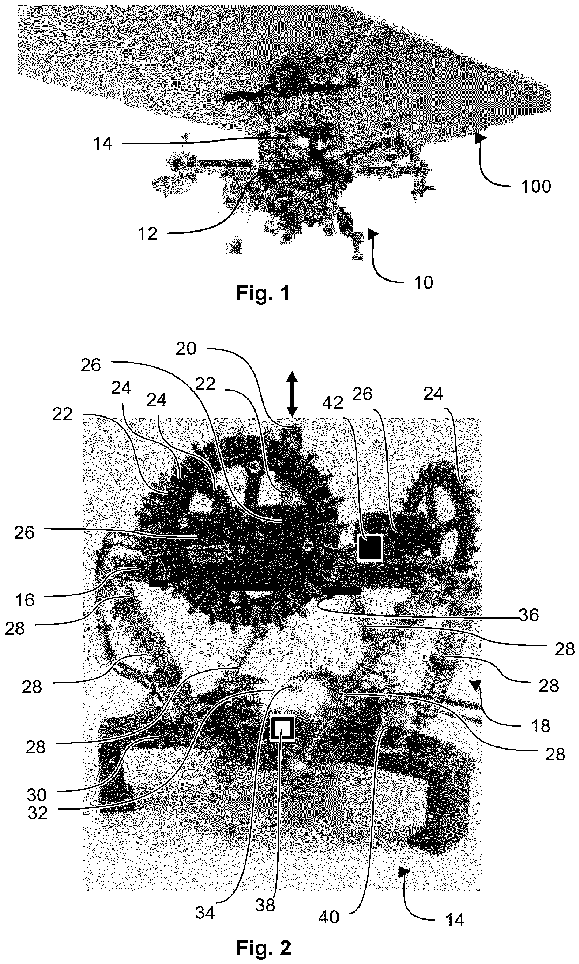

**Fig. 1** zeigt einen Bauroboter **10,** der an einer Decke **100,** also eines Baustellenobjekts, eines im Bau befindlichen Gebäudes, insbesondere auf einer in dem Gebäude befindlichen Baustelle, eine Bauaufgabe ausführt. Die Bauaufgabe besteht darin, Markierungen entsprechend vorliegenden CAD-Planungsdaten an der Unterseite der Decke 100 zu markieren.

Der Bauroboter 10 ist als Drohne, d. h. als unbemanntes Flugobjekt, ausgebildet. Dazu weist er eine mobile Plattform **12** in Form eines Hexakopters auf. An der mobilen Plattform 12 ist eine Endeffektor-Plattform **14** angeordnet.

**Fig. 2** zeigt die Endeffektor-Plattform 14 in einer perspektivischen Ansicht von der Seite.

Die Endeffektor-Plattform 14 umfasst einen Endeffektor **16**. Der Endeffektor 16 ist über einen Parallelmanipulator **18** des Bauroboters 10 mit der mobilen Plattform 12 verbunden.

Der Bauroboter 10 ist eingerichtet, Markierungen gemäß an den Bauroboter 10 übermittelten CAD-Daten auf der Decke 100 zu markieren. Dazu weist der Endeffektor 16 einen Markierstift **20** auf.

Der Markierstift 20 ist auf einer Hubvorrichtung **22** angeordnet. Somit kann der Markierstift 20 in der in Fig. 1 dargestellten Stellung des Bauroboters 10 zur Decke 100 hin und / oder von dieser weg bewegt werden, insbesondere ohne die Endeffektor-Plattform 14 insgesamt bewegen zu müssen. Diese Bewegungsmöglichkeit ist in Fig. 2 mit einem Doppelpfeil symbolisiert.

Der Markierstift 20 ist als Farbstift ausgebildet, sodass er eine Farbmarkierung auf die Decke 100 aufbringen kann, sobald er die Decke 100 berührt. Um einen adäquaten Farbauftrag zu ermöglichen und den Markierstift 20 vor zu großen mechanischen Belastungen zu schützen, kann der Markierstift 20 federnd, beispielsweise mittels eines Schaummaterials und / oder eines Metallelements, an der Hubvorrichtung 22 angeordnet sein. Der Markierstift 20 stellt somit ein Markierwerkzeug dar, das in einer Werkzeugaufnahme (in der Darstellung gemäß Fig. 2 nicht sichtbar), die wiederum an der Hubvorrichtung 22 angeordnet ist, aufgenommen ist.

Der Endeffektor 16 weist ferner drei Kontaktelemente **24** auf. Die Kontaktelemente 24 sind als Räder, insbesondere als omnidirektionale Räder, ausgebildet. Wie insbesondere auch anhand von Fig. 1 erkennbar ist, kontaktieren die Kontaktelemente 24 während der Ausführung der Bauaufgabe, also während des Markierens der Decke 100, die Decke 100. Sie sind durch Motoren **26** jeweils einzeln antreibbar. Somit lässt sich der Endeffektor 16 mit Hilfe der motorisch antreibbaren Kontaktelemente 24, also in diesem Ausführungsbeispiel mit Hilfe der omnidirektionalen Räder, entlang der Decke 100 (Fig. 1) zumindest entlang zweier Dimensionen bewegen.

Der Parallelmanipulator 18 ist als Hexapod ausgebildet. Erweist sechs Stützarme **28** auf. Die Stützarme 28 sind in diesem Ausführungsbeispiel nicht angetrieben, sind aber an Lagerstellen des Endeffektors 16 einerseits sowie an Lagerstellen einer unter dem Endeffektor 16 befindlichen Befestigungsvorrichtung **30** drehbar gelagert. Somit ist der Endeffektor 16 relativ beweglich zur Befestigungsvorrichtung 30, insbesondere mit wenigstens 6 Freiheitsgraden, bewegbar, aber dennoch durch die Stützarme 28 gestützt. Der Parallelmanipulator 18 ist somit als passives System ausgebildet.

Die Stützarme 28 sind als, insbesondere fluid-gedämpfte, Stoßdämpfer ausgebildet. Zur Dämpfung weisen sie einen fluid-befüllten, insbesondere mit Wasser befüllten, Kolben sowie außenseitig angeordnete Federelemente auf. Die Kolben zusammen mit den jeweiligen Federelementen bilden somit Dämpfungselemente. Zusätzlich sorgen die Federelemente bei Auslenkung des Endeffektors 16 relativ zur Befestigungsvorrichtung 30 aus einer Ruhelage heraus für eine selbsttätige Rückstellung in die Ruhelage. Die Federhärten der Stützarme 28 können dabei so eingestellt sein, dass sie durch das Eigengewicht des Endeffektors 16 oder, alternativ, durch das Eigengewicht des Endeffektors 16 zuzüglich einer zu erwarteten Zusatzlastkraft, beispielsweise 15 N, in der Ruhelage in etwa bis zur Hälfte der Gesamtlänge der Stützarme 28 eingefahren sind. Sie können ausgehend von der Ruhelage so eingerichtet sein, dass der Endeffektor 16 hinreichend weit bewegbar ist, beispielsweise um jeweils 2 bis 4 cm in einer x- und einer y-Richtung einer zum Endeffektor 16 parallelen Ebene, sein.

Die Stützarme 28 sind derart angeordnet, dass sich die Endeffektor-Plattform 14 in der Ruhelage in einem stabilen Zustand befindet. Insbesondere sind die Stützarme 28 derart angeordnet, dass der Endeffektor 16 nicht von selbst zu einer Seite hin abkippt.

Für eine derartige stabile Ruhelage geeignete Positionen und / oder Lagen für die Stützarme 28 lassen sich finden, indem eine Gesamtenergiebilanz der Anordnung, insbesondere umfassend eine Lageenergie des Endeffektors sowie gegebenenfalls der Stützarme 28 in Abhängigkeit von seiner bzw. deren Position und / oder Lage sowie eine Spannenergie der Federelemente der Stützarme 28, erstellt wird und ein möglichst globales, mindestens jedoch lokales Minimum der Gesamtenergie in Abhängigkeit von der Positionierung und / oder Ausrichtung der Stützarme 28 gesucht wird.

Die Befestigungsvorrichtung 30 dient zur Befestigung der Endeffektor-Plattform 14 an der mobilen Plattform 12 (siehe Fig. 1). Die Befestigung kann lösbar ausgebildet sein, sodass die Endeffektor-Plattform 14 auch nachträglich noch auf anderen mobilen Plattformen, beispielsweise Octakoptern oder auf einer bodengestützten mobilen Plattform, beispielsweise einem Räder- und / oder Kettenfahrwerk, montierbar ist.

Die Befestigungsvorrichtung 30 bildet eine untere Eben unterhalb des Endeffektors 16. Sie weist eine Beleuchtung **32** sowie eine Kamera **34** auf. Die Beleuchtung 32 und die Kamera 34 sind nach oben hin, also auf die Unterseite des Endeffektors 16 hin, ausgerichtet. An der Unterseite des Endeffektors 16, insbesondere im Sichtfeld der Kamera 34, befindet sich eine Lokalisationskennzeichnung **36.**

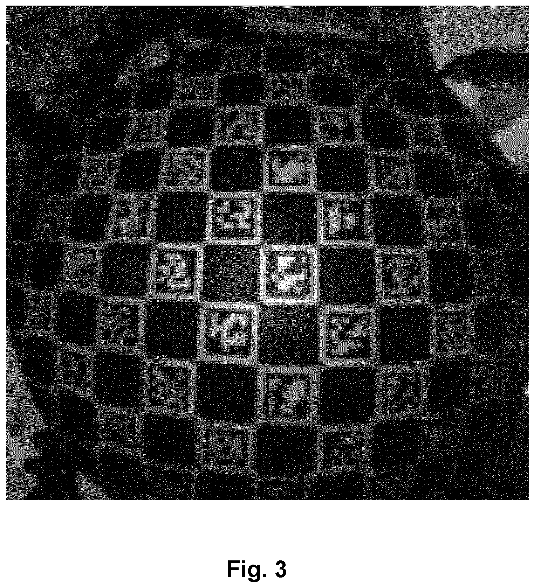

**Fig. 3** zeigt beispielhaft ein von der Kamera 34 aufgezeichnetes Bild der Lokalisationskennzeichnung 36. Die Lokalisationskennzeichnung 36 weist ein Schachbrett-artiges Muster von Passermarken, beispielsweise in Form von ArUco-Markierungen, auf.

Eine Steuereinheit **38,** in Fig. 2 schematisch dargestellt, ist eingerichtet, von der Kamera 34 aufgenommene Bilder auszuwerten und durch Bildverarbeitung aus Art, Größe, Lage und / oder Position der Passermarken eine Position und / oder Lage des Endeffektors 16 relativ zur Befestigungsvorrichtung 30 zu ermitteln.

Weiter ist an der Befestigungsvorrichtung 30 ein Reflexionselement **40** angeordnet, das eingerichtet ist, beispielsweise von einer, insbesondere außerhalb des Bauroboters 10 befindlichen, Totalstation erfasst zu werden, sodass die Position und / oder Lage des Reflexionselements 40 und damit die Position und / oder die Lage der Befestigungsvorrichtung 30 ermittelbar ist.

Die Steuereinheit 38 kann eingerichtet sein, von einer solchen Totalstation Positions- und / oder Lagedaten zu erhalten und daraus in Verbindung mit der ermittelten relativen Position und / oder Lage des Endeffektors 16 relativ zur Befestigungsvorrichtung 30 eine absolute Position und / oder Lage des Endeffektors 16 und damit auch unter Berücksichtigung der Stellung der Hubvorrichtung 22 eine Position und / oder Lage des Markierstifts 20 relativ zur Totalstation, zur Decke 100 und / oder zu einem anderen ortsfesten Bezugssystem der Baustelle zu ermitteln.

Die Steuereinheit 38 kann weiter eingerichtet sein, die Kontaktelemente 24, also in diesem Ausführungsbeispiel die Räder, in Abhängigkeit von der ermittelten Position und / oder Lage des Markierstifts 20 zu steuern. So können beispielsweise Vibrationen oder andere geringe Positionsänderungen der mobilen Plattform 12 ausgeglichen werden.

Die Steuereinheit 38 kann dazu als Mikrocontroller ausgebildet sein. Sie kann insbesondere einen Mikroprozessor und auf dem Mikroprozessor ausführbaren, in einer Speichereinheit der Steuereinheit 38 gespeicherten, Programmcode aufweisen.

Um eine möglichst weitgehende Autarkie der Endeffektor-Plattform 14 zu erreichen, kann die Endeffektor-Plattform 14 noch eine von der mobilen Plattform 12 unabhängige Energiequelle, beispielsweise einen wiederaufladbaren Akkumulator, aufweisen.

Die Steuereinheit 38, die Kamera 34 sowie die Lokalisationskennzeichnung 36 bilden somit eine Sensorik, die eingerichtet ist, einer Pose des Endeffektors 16 relativ zur mobilen Plattform 12 zu erfassen.

Der Endeffektor 16 kann ferner einen, beispielsweise dreidimensional messenden, Beschleunigungssensor **42** aufweisen (in Fig. 2 lediglich schematisch dargestellt). Somit können Beschleunigungen des Endeffektors 16 gemessen werden. Mit Hilfe der gemessenen Beschleunigungen kann die Ermittlung der Position und / oder Lage des Endeffektors 16 und damit des Markierstifts 20, insbesondere durch die Steuereinheit 38, weiter verbessert werden.

### Bezugszeichenliste

- 10: Bauroboter
- 12: Mobile Plattform
- 14: Endeffektor-Plattform
- 16: Endeffektor
- 18: Parallelmanipulator
- 20: Markierstift
- 22: Hubvorrichtung
- 24: Kontaktelement
- 26: Motor
- 28: Stützarm
- 30: Befestigungsvorrichtung
- 32: Beleuchtung
- 34: Kamera
- 36: Lokalisationskennzeichnung
- 38: Steuereinheit
- 40: Reflexionselement
- 42: Beschleunigungssensor
- 100: Decke

## Patentansprüche

1. **Bauroboter** (10) zur Ausführung einer Bauarbeit an einem Baustellenobjekt, umfassend
- eine mobile Plattform (12),
- einen Endeffektor (16), wobei der Endeffektor (16) wenigstens ein Werkzeug oder eine Werkzeugaufnahme zur Aufnahme eines Werkzeugs aufweist, und
- einen Parallelmanipulator (18), wobei der Endeffektor (16) und die mobile Plattform (12) über den Parallelmanipulator (18) miteinander verbunden sind,
- wobei der Endeffektor (16) wenigstens ein Kontaktelement (24) aufweist, das eingerichtet ist, das zu bearbeitende Baustellenobjekt während einer Bauarbeit zu kontaktieren, und
- eine Sensorik zur Erfassung einer Pose des Endeffektors (16) relativ zur mobilen Plattform (12).

2. Bauroboter nach dem vorhergehenden Anspruch, **dadurch gekennzeichnet, dass** die Sensorik eine Bildaufnahmeeinheit umfasst.

3. Bauroboter nach einem der vorhergehenden Ansprüche, **dadurch gekennzeichnet, dass** am Endeffektor (16) und / oder am Parallelmanipulator (18) eine Lokalisationskennzeichnung, beispielsweise in Form einer AruCo-Markierung, aufweist.

4. Bauroboter nach einem der vorhergehenden Ansprüche, **dadurch gekennzeichnet, dass** die Lokalisationskennzeichnung zumindest teilweise, vorzugsweise vollständig, in einem Sichtfeld der Bildaufnahmeeinheit angeordnet ist.

5. Bauroboter nach einem der vorhergehenden Ansprüche, **dadurch gekennzeichnet, dass** der Parallelmanipulator (18) als passives System ausgebildet ist.

6. Bauroboter nach einem der vorhergehenden Ansprüche, **dadurch gekennzeichnet, dass** der Parallelmanipulator (18) wenigstens drei, bevorzugt wenigstens sechs, Freiheitsgrade aufweist.

7. Bauroboter nach einem der vorhergehenden Ansprüche, **dadurch gekennzeichnet, dass** der Parallelmanipulator derart eingerichtet ist, bei geringer Auslenkung des Endeffektors (16) relativ zur mobilen Plattform (12) aus einer Ruhelage heraus selbsttätig, insbesondere schwerkraftgetrieben, in die Ruhelage zurückzukehren.

8. Bauroboter nach einem der vorhergehenden Ansprüche, **dadurch gekennzeichnet, dass** die mobile Plattform (12) eine Flugplattform ist.

9. Bauroboter nach einem der vorhergehenden Ansprüche, **dadurch gekennzeichnet, dass** der Parallelmanipulator (18) als Hexapod ausgebildet ist.

10. Bauroboter nach einem der vorhergehenden Ansprüche, **dadurch gekennzeichnet, dass** der Bauroboter (10) einen Beschleunigungssensor (42) aufweist, insbesondere wobei der Beschleunigungssensor (42) am Endeffektor (16) ausgebildet ist.

11. Bauroboter nach einem der vorhergehenden Ansprüche, **dadurch gekennzeichnet, dass** der Bauroboter (10), insbesondere der Endeffektor (16) und / oder die mobile Plattform (12), ein Positionsmesssystem zur Ermittlung einer Pose des Bauroboters (10) relativ zu einer Umgebung, insbesondere einer Baustelle, aufweist und / oder eingerichtet ist, von einem solchen Positionsmesssystem zur Bestimmung seiner Position und / oder Lage erfasst zu werden.

12. Bauroboter nach einem der vorhergehenden Ansprüche, **dadurch gekennzeichnet, dass** das Positionsmesssystem einen Laserdistanzmesser und / oder eine Totalstation umfasst.

13. Bauroboter nach einem der vorhergehenden Ansprüche, **dadurch gekennzeichnet, dass** das Kontaktelement (24) wenigstens ein Rad, insbesondere ein omnidirektionales Rad, aufweist.

14. Bauroboter nach einem der vorhergehenden Ansprüche, **dadurch gekennzeichnet, dass** das Kontaktelement (24) motorisch antreibbar ist.

15. Bauroboter nach einem der vorhergehenden Ansprüche, **dadurch gekennzeichnet, dass** der Parallelmanipulator (18) wenigstens ein Rückstellelement und / oder ein Dämpfungselement aufweist.

16. Bauroboter nach einem der vorhergehenden Ansprüche, **dadurch gekennzeichnet, dass** das Werkzeug ein Markierwerkzeug, ein Bohrwerkzeug, ein Meißelwerkzeug, ein Schleifwerkzeug und / oder ein Schneidwerkzeug, insbesondere eine Sägeblatt, ist und / oder umfasst.
